# EUROPÄISCHE PATENTSCHRIFT

(11) **EP 4 308 967 B1**
(45) Veröffentlichungstag und Bekanntmachung des Hinweises auf die Patenterteilung: **19.02.2025**
(21) Anmeldenummer: 22714193.4
(22) Anmeldetag: 14.03.2022
(51) Int. Cl.: G01S 7/52, G01S 7/527, G01S 15/04, G01S 15/931

(54) **VERFAHREN ZUM BETREIBEN EINER ULTRASCHALLSENSORVORRICHTUNG ZUM ÜBERWACHEN EINES UNTERBODENBEREICHS EINES KRAFTFAHRZEUGS, COMPUTERPROGRAMMPRODUKT, COMPUTERLESBARES SPEICHERMEDIUM SOWIE ULTRASCHALLSENSORVORRICHTUNG**
METHOD FOR OPERATING AN ULTRASONIC SENSOR DEVICE FOR MONITORING AN UNDERBODY REGION OF A MOTOR VEHICLE, COMPUTER PROGRAM PRODUCT, COMPUTER-READABLE STORAGE MEDIUM, AND ULTRASONIC SENSOR DEVICE
PROCÉDÉ DE FONCTIONNEMENT D'UN DISPOSITIF À CAPTEURS ULTRASONORES POUR SURVEILLER UNE ZONE DE SOUBASSEMENT DE CARROSSERIE D'UN VÉHICULE AUTOMOBILE, PRODUIT-PROGRAMME INFORMATIQUE, SUPPORT DE STOCKAGE LISIBLE PAR ORDINATEUR ET DISPOSITIF À CAPTEURS ULTRASONORES

(30) Priorität: 18.03.2021 DE 102021106633
(43) Veröffentlichungstag der Anmeldung: 24.01.2024
(73) Patentinhaber: Valeo Schalter und Sensoren GmbH, 74321 Bietigheim-Bissingen (DE)
(72) Erfinder: POEPPERL, Maximilian, 96317 Kronach Neuses (DE); BECKER, Felix, 96317 Kronach Neuses (DE)
(74) Vertreter: Enge, Sebastian
(86) Internationale Anmeldenummer: PCT/EP2022/056472
(87) Internationale Veröffentlichungsnummer: WO 2022/194746

(56) Entgegenhaltungen:
- EP-A1- 1 923 716
- DE-A1- 102018 130 914
- DE-A1- 102019 115 133

## Beschreibung

Die Erfindung betrifft ein Verfahren zum Betreiben einer Ultraschallsensorvorrichtung zum Überwachen eines Unterbodenbereichs eines Kraftfahrzeugs mittels der Ultraschallsensorvorrichtung des Kraftfahrzeugs, bei welchem mittels zumindest eines Ultraschallsensors der Ultraschallsensorvorrichtung Ultraschallsignale in den Unterbodenbereich ausgesendet werden und bei welchem mittels des Ultraschallsensors die reflektierten Ultraschallsignale empfangen und ausgewertet werden. Ferner betrifft die Erfindung ein Computerprogrammprodukt, ein computerlesbares Speichermedium sowie eine Ultraschallsensorvorrichtung.

Die Überprüfung beziehungsweise Überwachung des Unterbodenbereichs eines Kraftfahrzeugs vor dem Losfahren ist eine Aufgabe, die im Zuge des autonomen Fahrens vom Kraftfahrzeug selbst übernommen werden muss. Dabei sollen insbesondere gefährdete Objekte, wie zum Beispiel Kinder oder Tiere, vor dem Losfahren detektiert werden und somit ein Losfahren verhindert werden, um eine Verletzung derer zu vermeiden. Zur Erkennung der Objekte können dabei verschiedene Sensorsysteme eingesetzt werden. Beispielsweise können hierbei Kameras oder Lidarsensoren, die aufgrund der schwierigen Umgebungsbedingungen nur mit zusätzlichen Vorkehrungen betrieben werden können, eingesetzt werden. Alternativ oder ergänzend können auch Radarsensoreinrichtungen und/oder Ultraschallsensoreinrichtungen eingesetzt werden. Insbesondere bei Ultraschallsensoreinrichtungen kann oftmals keine laterale Ortsauflösung realisiert werden. Dies führt dazu, dass Mehrfachreflexionen vom Unterboden nicht von relevanten Objekt-Reflexionen unterschieden werden können. Außerdem können auf diese Weise auch Verdeckungen entstehen, das heißt, dass zum Beispiel die Räder des Kraftfahrzeugs stärker Reflexionen hervorrufen als das eigentliche Objekt und dieses Objekt ist dann im Ultraschallsignal nicht mehr erkennbar.

Ferner kann bei der Kalibrierung prinzipiell davon ausgegangen werden, dass der Abstand zwischen einem Sensor und der Fahrbahnoberfläche konstant ist, da eine Kalibrierung typischerweise nur die Ausschwingzeit sowie die Reflexionen der Fahrbahnoberfläche handhabt. Hierbei ist jedoch gemäß dem Stand der Technik nicht beachtet, dass sich ein Beladungszustand des Kraftfahrzeugs ändern kann. Insbesondere kann jedoch der Beladungszustand einen gravierenden Einfluss auf die Kalibrierung haben. Zusätzlich besitzen unterschiedliche Fahrzeugmodelle unterschiedliche Höhen zwischen Unterboden und Fahrbahnbelag.

Die WO 03/016941 A2 offenbart eine Echosignalüberwachungsvorrichtung mit einer Mehrzahl von Sende- und Empfangseinheiten zum Aussenden von Signalen und Empfangen der von einem externen Gegenstand zurückgeworfenen Echos, und eine Auswertungseinheit zum Abschätzen der Entfernung von der Überwachungsvorrichtung zu dem externen Objekt anhand der empfangenen Echos wobei sie einen Betriebszustand zum Berechnen der relativen Position der Sende- und Empfangseinheiten zueinander anhand der zurückgeworfenen Echos aufweist.

Die DE 10 2018/130914 A1 betrifft ein Verfahren zum Betreiben einer Ultraschallsensorvorrichtung, bei welchem ein Ultraschallsignal in einen Bodenbereich eines Kraftfahrzeugs ausgesendet wird und ein Ultraschallsignal empfangen wird und in Abhängigkeit des empfangenen Ultraschallsignals ein Objekt mittels einer elektronischen Recheneinrichtung erkannt wird, wobei ein erstes Ultraschallsignal zu einem ersten Zeitpunkt in dem Bodenbereich empfangen wird und ein zweites Ultraschallsignal zu einem zweiten Zeitpunkt empfangen wird und das erste Ultraschallsignal als erste Referenzkurve mit dem zweiten Ultraschallsignal als Vergleichskurve miteinander verglichen werden und in Abhängigkeit des Vergleichs, wobei in Abhängigkeit von empfangenen ersten Amplituden ein erster Schwellwertbereich erzeugt wird, das Objekt erkannt wird, wenn eine vorbestimmte erste Anzahl von empfangenen ersten Amplituden der Vergleichskurve außerhalb des Schwellwertbereichs detektiert wird.

Die DE 10 2017 208 268 B3 schlägt ein Verfahren zur Bestimmung des Beladungszustands eines Fahrzeugs und/oder zur Bestimmung der Einbauhöhe mindestens eines Ultraschallsensors des Fahrzeugs vor, wobei ein Ultraschallsensor des Fahrzeugs mindestens einen ersten Betriebsmodus und einen zweiten Betriebsmodus, der sich von dem ersten Betriebsmodus zumindest in einem Betriebsparameter unterscheidet, aufweist. Der Ultraschallsensor wird zur Umfelderfassung in dem ersten Betriebsmodus betrieben. Dieser erste Betriebsmodus kann auch als Normalbetrieb oder Messbetrieb bezeichnet werden. Zur Bestimmung des Beladungszustands des Fahrzeugs und/oder zur Bestimmung der Einbauhöhe wird der Ultraschallsensor in dem zweiten Betriebsmodus betrieben. Es ist vorgesehen, dass der Ultraschallsensor in dem zweiten Betriebsmodus derart angesteuert wird, dass der Ultraschallsensor eine im Vergleich zu dem ersten Betriebsmodus erhöhte Schallabstrahlung in Richtung der Fahrbahn, also des Untergrunds, auf dem das Fahrzeug steht, aufweist. Zur Bestimmung des Beladungszustands des Fahrzeugs und/oder zur Bestimmung der Einbauhöhe werden von der Fahrbahn reflektierte Echosignale, sogenannte Bodenechos, der von dem Ultraschallsensor ausgesendeten Ultraschallsignale ausgewertet.

Aus der DE 10 2019 115 133 A1 ist ein Verfahren zum Überwachen eines Unterbodenbereichs unterhalb eines Fahrzeugs bekannt, bei welchem mittels einer Ultraschallsensorvorrichtung Messungen durchgeführt werden, wobei bei jeder der Messungen zumindest ein Ultraschallsensor zum Aussenden eines Ultraschallsignals in den Unterbodenbereich angesteuert wird und ein Sensorsignal bestimmt wird, welches einen zeitlichen Verlauf des empfangenen Ultraschallsignals beschreibt, wobei anhand eines bei einer ersten Messung bestimmten ersten Sensorsignals ein Referenzsignal bestimmt wird und anhand eines Vergleichs eines bei einer nachfolgenden, zweiten Messung bestimmen zweiten Sensorsignals mit dem Referenzsignal das Vorhandensein eines Objekts in dem Unterbodenbereich überprüft wird, wobei das erste Sensorsignal zum Bestimmen des Referenzsignals mit einer Skalierungsfunktion skaliert wird, wobei eine Amplitude der Skalierungsfunktion in Abhängigkeit von der Zeit variiert.

Aufgabe der vorliegenden Erfindung ist, ein Verfahren, ein Computerprogrammprodukt, ein computerlesbares Speichermedium sowie eine Ultraschallsensorvorrichtung zu schaffen, mittels welchen eine zuverlässigere Überwachung eines Unterbodenbereichs eines Kraftfahrzeugs realisiert werden kann.

Diese Aufgabe wird durch ein Verfahren, ein Computerprogrammprodukt, ein computerlesbares Speichermedium sowie eine Ultraschallsensorvorrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Überwachen eines Unterbodenbereichs eines Kraftfahrzeugs mittels einer Ultraschallsensorvorrichtung des Kraftfahrzeugs. Es werden mittels zumindest eines Ultraschallsensors der Ultraschallsensorvorrichtung Ultraschallsignale in den Bodenbereich ausgesendet, und es werden mittels des Ultraschallsensors die reflektierten Ultraschallsignale empfangen und ausgewertet. Nach einem Abstellen des Kraftfahrzeugs zu einem ersten Zeitpunkt wird eine Referenzmesskurve für den Unterbodenbereich in Abhängigkeit von zumindest einem Ultraschallsignal erzeugt und abgespeichert.

Es ist vorgesehen, dass ein Messbereich in der Referenzmesskurve bestimmt wird, in welchem eine Auswertung für die Überwachung des Unterbodenbereichs durchgeführt wird, wobei der Messbereich in Abhängigkeit von einer Ausschwingzeit des Ultraschallsensors und einer Bodenreflexion auf der Bodenfläche bestimmt wird.

Dadurch kann eine zuverlässigere Überwachung eines Unterbodenbereichs eines Kraftfahrzeugs realisiert werden kann.

Insbesondere ist der Messbereich zwischen dem Unterboden des Kraftfahrzeugs und dem Bodenbereich, insbesondere zwischen der Ausschwingzeit und der Bodenreflexion, definiert. Dieser Messbereich kann durch die Berücksichtigung der Ausschwingzeit und der Bodenreflexion zuverlässig bestimmt werden, wodurch eine verbesserte Überwachung des Unterbodenbereichs durchgeführt werden kann. Innerhalb dieses Messbereichs kann dann vorgesehen sein, dass nach Objekten gesucht wird.

Erfindungsgemäß wird nach einem erneuten Start des Kraftfahrzeugs zu einem zum ersten Zeitpunkt späteren zweiten Zeitpunkt eine Vergleichsmesskurve in Abhängigkeit von zumindest einem weiteren Ultraschallsignal erzeugt und die Referenzmesskurve wird mit der Vergleichsmesskurve im Messbereich verglichen und in Abhängigkeit von dem Vergleich wird das Überwachen des Unterbodenbereichs mittels einer elektronischen Recheneinrichtung der Ultraschallsensorvorrichtung durchgeführt.

Erfindungsgemäß ist vorgesehen, dass in Abhängigkeit von dem Vergleich eine Höhenänderung zwischen einem Unterboden des Kraftfahrzeugs und einer Bodenfläche im Unterbodenbereich bestimmt wird und die Höhenänderung bei der Auswertung und dem Überwachen berücksichtigt wird, wobei die Höhenänderung zwischen dem ersten Zeitpunkt und dem zweiten Zeitpunkt bestimmt wird.

Somit ist es ermöglicht, dass zuverlässig der Unterbodenbereich des Kraftfahrzeugs überwacht werden kann. Unter Unterbodenbereich ist insbesondere der Bereich zu verstehen, welcher sich zwischen einer Fahrbahnoberfläche, auf welcher sich das Kraftfahrzeug befindet, und einem Bodenbereich des Kraftfahrzeugs ausbildet. Durch das vorgeschlagene Verfahren ergibt sich die Möglichkeit, die Ultraschallsensorvorrichtung bei verschiedenen Fahrzeugmodellen, bei verschiedenen Beladungszuständen und auch bei Fahrwerksänderungen zu verwenden. Damit ergibt sich eine höhere Flexibilität der Ultraschallsensorvorrichtung sowohl für den vollautonomen Betrieb, beispielsweise bei einem sogenannten Valet-Parking, aber auch im unterstützenden Betrieb, bei dem die Beladung unter anderem durch die Fahrzeuginsassen stark beeinflusst wird.

Insbesondere nutzt somit die Erfindung, dass bei einem Abstellen des Kraftfahrzeugs davon ausgegangen werden kann, dass sich kein Objekt im Unterbodenbereich befindet. Es wird hierzu nach dem Abstellen des Kraftfahrzeugs die Referenzmesskurve erzeugt, die objektlos erzeugt ist. Es kann hierbei eine Höhe des Unterbodens des Kraftfahrzeugs zur Fahrbahnoberfläche bestimmt werden. Bei einem erneuten Starten des Kraftfahrzeugs wird erneut ein Ultraschallsignal ausgesendet und es wird die Vergleichsmesskurve erzeugt. Sollte sich nun ein Objekt im Unterbodenbereich befinden, so kann dieses anhand des Vergleichs detektiert werden. Zusätzlich kann nun eine weitere Höhe bestimmt werden, welche sich beispielsweise aufgrund eines geänderten Beladungszustand des Kraftfahrzeugs im Vergleich zum ersten Zeitpunkt ergeben kann. Diese Höhenänderung wird nun bei der Objektsuche im Unterbodenbereich berücksichtigt.

Gemäß einer vorteilhaften Ausgestaltungsform wird im reflektierten Ultraschallsignal der Referenzmesskurve eine Bodenreflexion der Bodenfläche bestimmt und es wird eine erste Höhe zur Bodenfläche auf Basis der bestimmten Bodenreflexion zum ersten Zeitpunkt bestimmt. Im weiteren reflektierten Ultraschallsignal der Vergleichsmesskurve wird eine Bodenreflexion der Bodenfläche bestimmt und es wird eine zweite Höhe zur Bodenfläche auf Basis der bestimmten Bodenreflexion zum zweiten Zeitpunkt bestimmt. Durch Vergleichen der ersten Höhe und der zweite Höhe wird die Höhenänderung bestimmt. Insbesondere wird somit für den Ultraschallsensor eine Bestimmung der Bodenfreiheit durchgeführt. Dazu wird ein Messsignal des Ultraschallsensors aufgezeichnet. Bei dem Abstellen des Kraftfahrzeugs kann davon ausgegangen werden, dass keine Objekte in den kritischen Bereichen vorhanden sind, so dass das erste Maximum im Ultraschallsignal der Fahrbahnoberfläche zugeordnet werden kann. Zusätzlich zu dieser Reflexion kann die Dauer der Ausschwingzeit bestimmt werden. Aus diesen beiden Punkten kann nun adaptiv der Bereich zur Auswertung von Signalen für die Unterbodenerkennung bestimmt werden. Zusätzlich können aus diesen beiden Punkten und deren Amplituden weitere Parameter abgeleitet werden. Insbesondere kann durch die Bestimmung der ersten Höhe während des ersten Zeitpunkts sowie durch die Bestimmung der zweiten Höhe während des zweiten Zeitpunkts zuverlässig beispielsweise eine Änderung des Beladungszustands erfasst werden. Dadurch ist es ermöglicht, dass das Verfahren robust gegenüber Beladungszuständen ist, so dass eine zuverlässige Überwachung des Unterbodenbereichs realisiert werden kann.

Weiterhin vorteilhaft ist, wenn eine Ausschwingzeit des Ultraschallsensors bei der Bestimmung der Höhenänderung berücksichtigt wird. Insbesondere im Bereich der Ausschwingzeit, was bedeutet, dass ein Schallwandler der Ultraschallsensorvorrichtung noch schwingt und somit nicht zum Empfangen geeignet ist, kann keine Objektdetektion durchgeführt werden, was nun berücksichtigt wird. Insbesondere ist somit der Ultraschallsensor während der Ausschwingzeit im Wesentlichen "taub". Durch Berücksichtigung dieser Taubheit kann eine zuverlässige Überwachung des Unterbodens des Kraftfahrzeugs realisiert werden.

Ferner hat es sich als vorteilhaft erwiesen, wenn zumindest eine erste Umweltbedingung bei der Erzeugung der Referenzmesskurve erfasst wird und/oder zumindest eine zweite Umweltbedingung bei der Erzeugung der Vergleichsmesskurve erfasst wird und die erste Umweltbedingung und/oder die zweite Umweltbedingung bei der Bestimmung der Höhenänderung berücksichtigt werden. Insbesondere haben Umweltbedingungen einen erheblichen Einfluss auf die Ultraschallsignale. Beispielsweise können Temperatur oder Luftfeuchtigkeit als Umweltbedingung einen erheblichen Einfluss auf die entsprechenden Messkurven haben. Durch die Berücksichtigung dieser Umweltbedingungen kann nun verbessert die Höhenänderung bestimmt werden und die Objektdetektion durchgeführt werden. Somit kann zuverlässig eine Überwachung des Unterbodenbereichs realisiert werden.

In einer weiteren vorteilhaften Ausgestaltungsform wird von dem zumindest einen Ultraschallsensor in einen Bereich hinter einem Rad des Kraftfahrzeugs das Ultraschallsignal ausgesendet. Insbesondere kann das Kraftfahrzeug eine Vielzahl von Ultraschallsensoren aufweisen, welche am Kraftfahrzeug verteilt angeordnet sind. Insbesondere sind diese hinter einem jeweiligen Rad ausgebildet. Insbesondere, da hinter den Rädern der kritische Bereiche für das Überfahren von Objekten ausgebildet, ist es vorteilhaft, eine entsprechende Überwachung in diesem Bereich durchzuführen. Somit können die Ultraschallsensoren verbessert eine Überwachung des Unterbodenbereichs durchführen. Die Anordnung der Ultraschallsensoren hierbei kann ergänzend auch an weiteren Bauteilen des Kraftfahrzeugs, beispielsweise im Bereich des Stoßfängers, realisiert werden. Insbesondere sind dabei die Ultraschallsensoren direkt vom Unterboden in Richtung zur Fahrbahnoberfläche ausgerichtet.

Ebenfalls vorteilhaft ist, wenn die Ultraschallsensorvorrichtung eine Vielzahl von Ultraschallsensoren am Kraftfahrzeug aufweist, wobei mittels der Vielzahl von Ultraschallsensoren der Unterbodenbereich des Kraftfahrzeugs überwacht wird. Somit können die Ultraschallsensoren verbessert eine Überwachung des Unterbodenbereichs durchführen. Die Anordnung hierbei kann an unterschiedlichen Bauteilen des Kraftfahrzeugs, beispielsweise im Bereich des Stoßfängers, realisiert werden. Insbesondere sind dabei die Ultraschallsensoren direkt vom Unterboden in Richtung zur Fahrbahnoberfläche ausgerichtet.

Weiterhin vorteilhaft ist, wenn eine jeweilige Referenzmesskurve und/oder eine jeweilige Vergleichsmesskurve eines Ultraschallsensors der Vielzahl von Ultraschallsensoren mit zumindest einer jeweiligen Referenzmesskurve und/oder einer jeweiligen Vergleichsmesskurve eines weiteren Ultraschallsensors der Vielzahl von Ultraschallsensoren verglichen und verifiziert wird. Sollte beispielsweise der Ultraschallsensor durch ein Objekt während der Erzeugung der Messkurven bedeckt sein, so kann dennoch die Höhenänderung auf Basis der weiteren Ultraschallsensoren durchgeführt werden. Insbesondere kann dann wiederum eine Verifizierung der Auswertung des Ultraschallsensors durchgeführt werden. Sollte beispielsweise die Vielzahl von Ultraschallsensoren einen entsprechenden Freiraum unterhalb des Kraftfahrzeugs erfassen, jedoch ein anderer Ultraschallsensor keinen Freiraum, so kann dies verifiziert werden und beispielsweise können entsprechenden Gegenmaßnahmen, wie beispielsweise das Erzeugen einer Warnnachricht für einen Nutzer des Kraftfahrzeugs eingeleitet werden. Somit kann eine zuverlässige Überwachung des Unterbodenbereichs realisiert werden.

Gemäß einer weiteren vorteilhaften Ausgestaltungsform werden während der Erzeugung der Referenzmesskurve überfahrene Objekte im Messbereich bei der Überwachung berücksichtigt. Sollten beispielsweise Objekte bei der Erzeugung der Referenzmesskurve innerhalb des Unterbodenbereichs vorkommen und auch überfahren werden, wie beispielsweise Hölzer oder Steine, so können diese in der Referenzmesskurve als überfahrbare Objekte mit abgespeichert werden und ebenfalls bei der Überwachung des Unterbodenbereichs bei der Abfahrt des Kraftfahrzeugs berücksichtigt werden. Somit kann eine umfängliche Überwachung des Unterbodenbereichs realisiert werden.

Ferner hat es sich als vorteilhaft erwiesen, wenn ein Messbereich in der Referenzmesskurve bestimmt wird, wobei eine Wichtung für Abtastwerte in dem Messbereich gegenüber Abtastwerten außerhalb des Messbereichs erhöht wird. Insbesondere ist somit eine adaptive Wichtung der Abtastwerte in der Auswertung der Messsignale für die Unterbodenbereichsüberwachung vorgeschlagen, um eine zuverlässige Objekterkennung zu ermöglichen. Eine Herausforderung bei der Objekterkennung sind dabei die unterschiedlichen Abstände der Objekte zum Boden, aber auch das unterschiedliche Reflexionsverhalten von Objekten. So führen beispielsweise weiche Objekte im Ultraschallsignal eher zu einem "Schlucken" von Echos, während harte Objekte neue Reflexionsspitzen verursachen. Mit Hilfe einer entsprechenden Wichtung kann dieser Effekt besser abgedeckt und damit die Objektdetektion deutlich verbessert werden.

Gemäß einer weiteren vorteilhaften Ausgestaltungsform werden ein Bodenreflexionsbereich und eine Ausschwingzeit des Ultraschallsensors in der Referenzmesskurve bestimmt, wobei eine Wichtung für Abtastwerte in dem Bodenreflexionsbereich gegenüber Abtastwerten innerhalb der Ausschwingzeit erhöht wird. Insbesondere, da während der Ausschwingzeit der Ultraschallsensor im Wesentlichen taub ist, befinden sich dort wenige Informationen bezüglich einer Überwachung des Unterbodenbereichs. Im Bereich der Bodenreflexion hingegen befinden sich mögliche Informationen, so dass die Wichtung im Bereich des bestimmten Bodenreflexionsbereichs erhöht wird. Somit können eine verbesserte Auswertung und Überwachung des Unterbodenbereichs durchgeführt werden.

Ferner hat es sich als vorteilhaft erwiesen, wenn zum Überwachen des Unterbodenbereichs eine nichtlineare Wichtung über die Ausschwingzeit, den Messbereich und den Bodenreflexionsbereich durchgeführt wird. Insbesondere können somit Informationen eines Objekts aus der Ausschwingzeit aber auch insbesondere aus dem Bodenreflexionsbereich in die Objekterkennung integriert werden und die Abtastwerte im gesamten Auswertebereich gewichtet werden. Der gesamte Auswertebereich ist dabei insbesondere von der Ausschwingzeit über den Messbereich bis hin zum Bodenreflexionsbereich definiert. Insbesondere wird nun der Einfluss des jeweiligen Bereichs für die Objekterkennung berücksichtigt. In der Ausschwingzeit befinden sich dabei kaum Informationen über ein Objekt, im Bereich zwischen Ausschwingzeit und der Bodenreflexion, mit anderen Worten im Messbereich, jedoch der Hauptanteil und in dem Bodenreflexionsbereich selbst wiederum deutlich weniger Informationen. Je nachdem, wo sich das Objekt befindet, beispielsweise sehr nahe am Sensor, beziehungsweise an der Ausschwingzeit, oder sehr nahe an der Bodenreflexion, kann sich die Objektinformation anders verteilen. Aus diesem Grund ist eine adaptive Wahl der Wichtung vorgeschlagen. Dazu werden während der Kalibrierung sowohl die Ausschwingzeit als auch Bodenreflexion vermessen, wobei neben der Amplitude und Position insbesondere die Schwankungen der entsprechenden Peaks beziehungsweise Breiten im Kalibrierzeitraum von Interesse sind. Bei der Überprüfung des Unterbodens können dann wiederum die Ausschwingzeit, aber auch die Höhe der Bodenreflexion untersucht werden. Je nach Wert der Merkmale kann eine nichtlineare Wichtung der Abtastpunkte vorgenommen werden und somit die Empfindlichkeit, aber auch die Robustheit der Objekterkennung deutlich erhöht werden.

Bei dem Verfahren handelt es sich insbesondere um ein sogenanntes computerimplementiertes Verfahren.

Ein weiterer Aspekt der Erfindung betrifft ein Computerprogrammprodukt mit Programmcodemitteln, welche in einem computerlesbaren Speichermedium gespeichert sind, um das Verfahren zum Überwachen eines Unterbodenbereichs nach dem vorhergehenden Aspekt durchzuführen, wenn das Computerprogrammprodukt auf einem Prozessor einer elektronischen Recheneinrichtung abgearbeitet wird.

Ein nochmals weiterer Aspekt der Erfindung betrifft ein computerlesbares Speichermedium mit einem Computerprogrammprodukt nach dem vorhergehenden Aspekt. Das computerlesbare Speichermedium kann insbesondere als Teil einer elektronischen Recheneinrichtung ausgebildet sein.

Die elektronische Recheneinrichtung weist insbesondere Schaltkreise, beispielsweise integrierte Schaltkreise, Prozessoren und weitere elektronische Bauteile auf, welche zum Abarbeiten des Computerprogrammprodukts notwendig sind.

Ein weiterer Aspekt der Erfindung betrifft eine Ultraschallsensorvorrichtung zum Überwachen eines Unterbodenbereichs eines Kraftfahrzeugs, mit zumindest einem Ultraschallsensor und mit einer elektronischen Recheneinrichtung, wobei die Ultraschallsensorvorrichtung zum Durchführen eines Verfahrens nach dem vorhergehenden Aspekt ausgebildet ist. Insbesondere wird das Verfahren mittels der Ultraschallsensorvorrichtung durchgeführt.

Ein nochmals weiterer Aspekt der Erfindung betrifft ein Kraftfahrzeug mit einer Ultraschallsensorvorrichtung nach dem vorhergehenden Aspekt. Das Kraftfahrzeug kann dabei sowohl teilweise autonom, insbesondere auch vollautonom, ausgebildet sein.

Vorteilhafte Ausgestaltungsformen des Verfahrens sind als vorteilhafte Ausgestaltungsformen der Ultraschallsensorvorrichtung sowie des Kraftfahrzeugs anzusehen. Die Ultraschallsensorvorrichtung sowie das Kraftfahrzeug weisen dazu gegenständliche Merkmale auf, welche eine Durchführung des Verfahrens oder eine vorteilhafte Ausgestaltungsform davon ermöglichen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Dabei zeigen:
- Fig. 1: eine schematische Seitenansicht einer Ausführungsform eines Kraftfahrzeugs mit einer Ausführungsform einer Ultraschallsensorvorrichtung;
- Fig. 2: ein schematisches Diagramm einer Referenzmesskurve;
- Fig. 3: ein schematisches Diagramm einer Vergleichsmesskurve; und
- Fig. 4: ein weiteres schematisches Diagramm einer Vielzahl von Referenzmesskurven.

In den Figuren sind gleiche oder funktionsgleiche Elemente mit gleichen Bezugszeichen versehen.

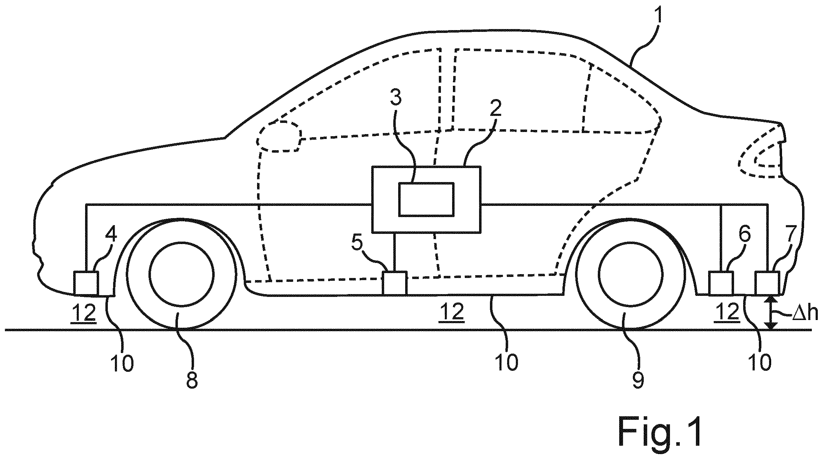

Fig. 1 zeigt eine schematische Seitenansicht einer Ausführungsform eines Kraftfahrzeugs 1 mit einer Ausführungsform einer Ultraschallsensorvorrichtung 2. Die Ultraschallsensorvorrichtung 2 weist insbesondere eine elektronische Recheneinrichtung 3 sowie zumindest einen Ultraschallsensor 4, 5, 6, 7 auf. Im folgenden Ausführungsbeispiel weist die Ultraschallsensorvorrichtung 2 einen ersten Ultraschallsensor 4, einen zweiten Ultraschallsensor 5, einen dritten Ultraschallsensor 6 sowie einen vierten Ultraschallsensor 7 auf. Die Ultraschallsensorvorrichtung 2 kann auch mehr als vier Ultraschallsensoren 4, 5, 6, 7 aufweisen. Dies ist im Ausführungsbeispiel rein beispielhaft und keinesfalls als abschließend zu betrachten.

Ferner ist in der Fig. 1 gezeigt, dass der erste Ultraschallsensor 4 beispielsweise in einem Frontbereich des Kraftfahrzeugs 1, beispielsweise an einer Stoßstange des Kraftfahrzeugs 1 angeordnet sein kann. Der zweite Ultraschallsensor 5 ist vorliegend hinter einem Vorderrad 8 angeordnet. Der dritte Ultraschallsensor 6 ist hinter einem Hinterrad 9 angeordnet. Der vierte Ultraschallsensor 7 ist an einem Heck des Kraftfahrzeugs 1, beispielsweise an einer Stoßstange des Kraftfahrzeugs 1, angeordnet. Auch die Verortung der unterschiedlichen Ultraschallsensoren 4, 5, 6, 7 ist vorliegend rein beispielhaft zu verstehen. Bevorzugt ist jedoch vorgesehen, dass die Ultraschallsensoren 4, 5, 6, 7 zumindest teilweise vor und hinter den entsprechenden Rädern 8, 9 angeordnet sind, da dies die kritischen Bereiche für das Überfahren von Objekten darstellt. Dabei ist es ebenfalls sinnvoll, dass die Ultraschallsensoren 4, 5, 6, 7 direkt von einem Unterboden 10 des Kraftfahrzeugs 1 in Richtung einer Bodenfläche 11, auf welcher sich das Kraftfahrzeug 1 befindet, ausgerichtet sind. Insbesondere ist zwischen dem Unterboden 10 und der Bodenfläche 11 ein Unterbodenbereich 12 ausgebildet.

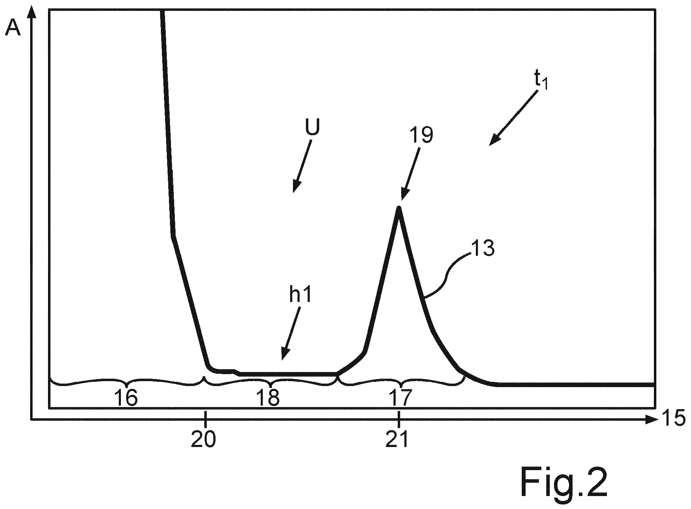

Bei einem Verfahren zum Überwachen des Unterbodenbereichs 12 des Kraftfahrzeugs 1 wird mittels zumindest eines Ultraschallsensors 4, 5, 6, 7 der Ultraschallsensorvorrichtung 2 ein Ultraschallsignal U (Fig. 2) ausgesendet, und es werden mittels des Ultraschallsensors 4, 5, 6, 7 die reflektierten Ultraschallsignale U empfangen und ausgewertet, wobei nach einem Abstellen des Kraftfahrzeugs 1 zu einem ersten Zeitpunkt t₁ (Fig. 2) eine Referenzmesskurve 13 (Fig. 2) für den Unterbodenbereich 12 in Abhängigkeit von zumindest einem Ultraschallsignal U erzeugt und abgespeichert wird. Es wird ein Messbereich 18 (Fig. 2) in der Referenzmesskurve 13 bestimmt, in welchem eine Auswertung für die Überwachung des Unterbodenbereichs 12 durchgeführt wird, wobei der Messbereich 18 in Abhängigkeit von einer Ausschwingzeit 16 (Fig. 2) des Ultraschallsensors 4, 5, 6, 7 und einer Bodenreflexion 19 (Fig. 2) auf der Bodenfläche 11 bestimmt wird.

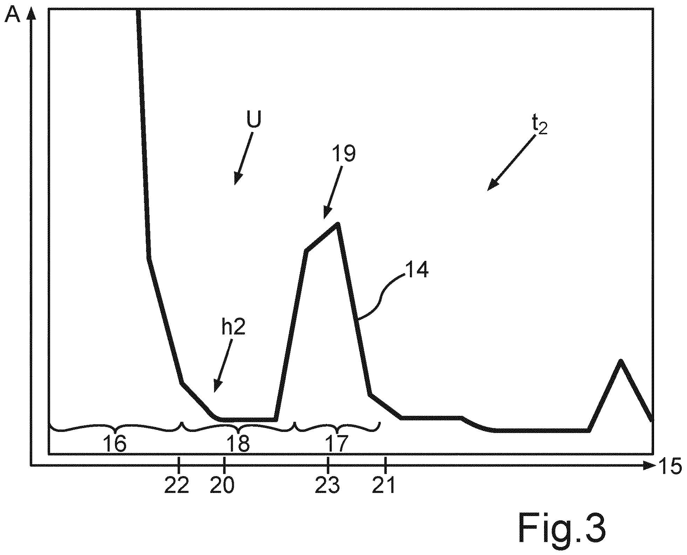

Es kann ferner nach einem erneuten Start des Kraftfahrzeugs 1 zu einem zum ersten Zeitpunkt t₁ späteren zweiten Zeitpunkt t₂ (Fig. 3) eine Vergleichsmesskurve 14 (Fig. 3) in Abhängigkeit von zumindest einem weiteren Ultraschallsignal U erzeugt, und die Referenzmesskurve 13 wird mit der Vergleichsmesskurve 14 verglichen und in Abhängigkeit von dem Vergleich wird das Überwachen des Unterbodenbereichs 12 mittels der elektronischen Recheneinrichtung 3 durchgeführt.

Es ist dabei vorgesehen, dass in Abhängigkeit von dem Vergleich eine Höhenänderung Δh zwischen dem Unterboden 10 des Kraftfahrzeugs 1 und der Bodenfläche 11 im Unterbodenbereich 12 bestimmt wird und die Höhenänderung Δh bei der Auswertung und dem Überwachen berücksichtigt wird, wobei die Höhenänderung Δh zwischen dem ersten Zeitpunkt t₁ und dem zweiten Zeitpunkt t₂ bestimmt wird.

Fig. 2 zeigt ein schematisches Diagramm einer Referenzmesskurve 13 und ist zum ersten Zeitpunkt t₁ erzeugt worden. Auf der Abszisse sind insbesondere Abtastwerte 15 der Ultraschallsignale U aufgetragen. Auf der Ordinate sind insbesondere entsprechende Amplituden des Ultraschallsignals U aufgezeigt. Die Referenzmesskurve 13 weist die Ausschwingzeit 16, den Bodenreflexionsbereich 17 sowie den Messbereich 18 auf.

Insbesondere weist der Bodenreflexionsbereich 18 einen Peak als die Bodenreflexion 19 auf, welcher beispielsweise den Boden selbst darstellt. Auf Basis des Messbereichs 18 kann insbesondere eine erste Höhe h1 bestimmt werden, wobei die erste Höhe h1 zwischen dem Unterboden 10 der Bodenfläche 11 während des ersten Zeitpunkts t₁ bestimmt wird. Eine zweite Höhe h2 (Fig. 3) kann insbesondere während des zweiten Zeitpunkts t₂ bestimmt werden.

Insbesondere zeigt die Fig. 2 ein typisches Signal eines Ultraschallsensors 4, 5, 6, 7 beim Einsatz im Unterbodenbereich 12 des Kraftfahrzeugs 1. Dabei sind insbesondere zwei Bereiche deutlich zu identifizieren. Zum einen der Bereich der Ausschwingzeit 16 zu Beginn des Signals und im weiteren Verlauf ein deutlicher Signalausschlag. Dieser Signalausschlag kann wiederum auf die Bodenreflexion 19 zurückgeführt werden. Der Abstand zwischen den beiden Merkmalen der Signale bestimmt somit den auszuwertenden Bereich, insbesondere den Messbereich 18, für die Objektdetektion im Unterbodenbereich 12.

Insbesondere ist das Ende der Ausschwingzeit 16 durch das Bezugszeichen 20 auf bei den Abtastwerten 15 gekennzeichnet, und der Peak für die Bodenreflexion 19 ist durch das Bezugszeichen 21 bei den Abtastwerten 15 gekennzeichnet. Dies ist vorliegend zum ersten Zeitpunkt t₁ der Fall.

Fig. 3 zeigt ein schematisches Diagramm der Vergleichsmesskurve 14 zum zweiten Zeitpunkt t₂. Im Vergleich zum Ultraschallsignal U gemäß Fig. 2 zeigt sich bereits ein Unterschied in der Ausschwingzeit 16. Zusätzlich ist noch deutlicher zu erkennen, dass die Form, aber auch der Abstand der Bodenreflexion 19 deutlich unterschiedlich zu der Fig. 2 ist. Insbesondere ist das Ende der Ausschwingzeit 16 durch das Bezugszeichen 22 auf bei den Abtastwerten 15 gekennzeichnet, und der Peak für die Bodenreflexion 19 ist durch das Bezugszeichen 23 bei den Abtastwerten 15 gekennzeichnet. Vorliegend ist dies zum zweiten Zeitpunkt t2 gezeigt. Zur Veranschaulichung sind auch die Bezugszeichen 20 und 21 gemäß Fig. 2 dargestellt.

Würde man nun dieselbe Auswertung beziehungsweise dieselben Auswertebereiche beziehungsweise Messbereiche 18 wie in der Fig. 2 anwenden, würde es zu Fehlern in der Bestimmung und damit auch zu Fehldetektionen oder zum Übersehen von Objekten kommen.

Es ist somit insbesondere vorgeschlagen, dass im reflektierten Ultraschallsignal U der Referenzmesskurve 13 die Bodenreflexion 19 der Bodenfläche 10 bestimmt wird und die erste Höhe h1 zur Bodenfläche 11 auf Basis der bestimmten Bodenreflexion 19 zum ersten Zeitpunkt t₁ bestimmt wird und im weiteren reflektierten Ultraschallsignal U der Vergleichsmesskurve 14 die Bodenreflexion 19 der Bodenfläche 11 bestimmt wird und die zweite Höhe h2 zur Bodenfläche 11 auf Basis der bestimmten Bodenreflexion 19 zum zweiten Zeitpunkt t₂ bestimmt wird und durch Vergleichen der ersten Höhe h1 und der zweiten Höhe h2 die Höhenänderung Δh bestimmt wird.

Wie bereits erwähnt kann die Ausschwingzeit 16 des Ultraschallsensors 4, 5, 6, 7 bei der Bestimmung der Höhenänderung Δh berücksichtigt werden. Es kann insbesondere ferner vorgesehen sein, dass zumindest eine erste Umweltbedingung bei der Erzeugung der Referenzmesskurve 13 erfasst wird und/oder zumindest eine zweite Umweltbedingung bei der Erzeugung der Vergleichsmesskurve 14 erfasst wird und die erste Umweltbedingung und/oder die zweite Umweltbedingung bei der Bestimmung der Höhenänderung Δh berücksichtigt werden. Beispielsweise können als Umweltbedingungen Temperaturen oder Luftfeuchtigkeitswerte angesehen werden. Es kann ferner vorgesehen sein, dass eine jeweilige Referenzmesskurve 13 und/oder eine jeweilige Vergleichsmesskurve 14 eines Ultraschallsensors 4, 5, 6, 7 der Vielzahl von Ultraschallsensoren 4, 5, 6, 7 mit zumindest einer jeweiligen Referenzmesskurve 13 und/oder einer jeweiligen Vergleichsmesskurve 14 eines weiteren Ultraschallsensors 4, 5, 6, 7 der Vielzahl von Ultraschallsensoren 4, 5, 6, 7 verglichen und verifiziert wird. Insbesondere überfahrbare Objekte können bei der Erzeugung der Referenzmesskurve 13 ebenfalls berücksichtigt werden.

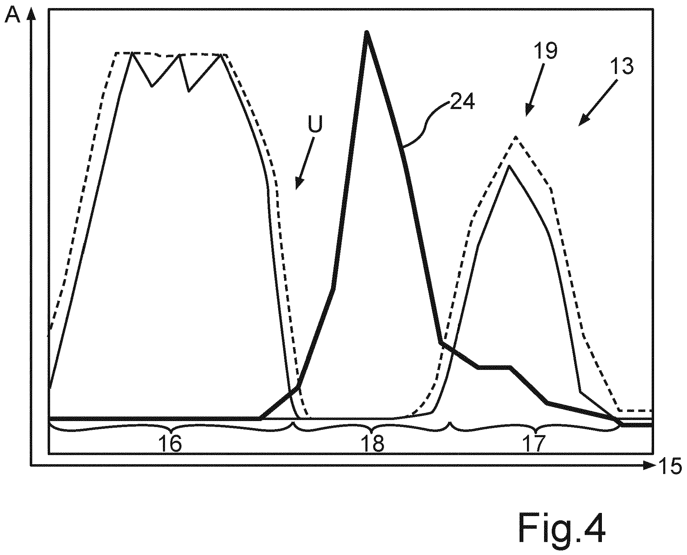

Fig. 4 zeigt ein weiteres schematisches Diagramm, insbesondere von einer Vielzahl von unterschiedlichen Referenzmesskurven 13. Insbesondere ist gezeigt, dass eine Vielzahl von unterschiedlichen Ausschwingzeiten 16 für die Referenzmesskurve 13 erfasst wird. Des Weiteren kann eine Vielzahl von Bodenreflexionsbereichen 17 bestimmt werden.

Insbesondere zeigt die Fig. 4, dass eine Überwachung des Unterbodenbereichs 12 nur in einem sehr begrenzten Signalabschnitt durchgeführt wird, da zwischen dem Ultraschallsensor 4, 5, 6, 7 und der Bodenfläche 11 typischerweise beispielsweise lediglich 20 cm verfügbar sind. Dieser Bereich wird zusätzlich durch die Ausschwingzeit 16 sowie den Bodenreflexionsbereich 17 eingeschränkt. Während in der Ausschwingzeit 16 normalerweise wenige Informationen über ein Objekt vorhanden sind, eine Ausnahme bildet dabei, wenn ein Objekt dabei den Ultraschallsensor 4, 5, 6, 7 berührt oder nur wenige Zentimeter von diesem entfernt ist, können auch in dem Bodenreflexionsbereich 17 auch Reflexionen vom Objekt enthalten sein. Da Bodenreflexionen 19 von der Reflexions-Amplitude deutlich höher sein können als gefährdete Objekte, ist ein entsprechendes Verfahren vorgeschlagen. Um die Informationen des Objekts aus der Ausschwingzeit 16, aber insbesondere aus der Bodenreflexion 19 in die Objekterkennung zu integrieren, bietet sich eine Wichtung 24 der Abtastwerte 15 im gesamten Auswertebereich an. Der Auswertebereich ist dabei insbesondere über die Ausschwingzeit 16, den Messbereich 18 sowie den Bodenreflexionsbereich 17 definiert. Dabei wird der Einfluss des jeweiligen Bereichs für die Objekterkennung berücksichtigt.

Wie bereits beschrieben, befindet sich in der Ausschwingzeit 16 typischerweise kaum Information über ein Objekt. Im Bereich zwischen der Ausschwingzeit 16 und der Bodenreflexion 19 jedoch der Hauptanteil und in der Bodenreflexion 19 selbst wiederum deutlich weniger. Je nachdem, wo sich das Objekt befindet, kann sich die Objektinformation anders verteilen. Aus diesem Grund ist die adaptive Wahl der Wichtung 24 vorgeschlagen. Dazu werden während der Erzeugung der Referenzmesskurve 13 die Ausschwingzeit 16 sowie die Bodenreflexion 19 vermessen. Neben der Amplitude und die Position sind auch die Schwankungen der entsprechenden Peaks mit Breiten im Kalibrierzeitraum von Interesse. Bei der Überprüfung des Unterbodenbereichs 12 können wiederum die Ausschwingzeit 16, aber auch die Höhe der Bodenreflexion 19 untersucht werden. Je nach Wert der Merkmale kann eine nichtlineare Wichtung 24 der Abtastpunkte 15 vorgenommen werden und somit die Empfindlichkeit, aber auch die Robustheit der Objekte kann deutlich erhöht werden. Die adaptive Wichtung 24 der Abtastwerte 15 in der Auswertung der entsprechenden Messsignale für die Unterbodenüberwachung ist vorteilhaft, um eine zuverlässige Objekterkennung überhaupt erst möglich zu machen. Die Herausforderungen bei der Objekterkennung sind dabei die unterschiedlichen Abstände der Objekte zur Bodenfläche 11, aber auch das unterschiedliche Reflexionsverhalten von Objekten. Mit Hilfe der adaptiven Wichtung 24 können diese Effekte besser abgedeckt und damit die Objektdetektion deutlich verbessert werden.

Die Fig. 4 zeigt insbesondere eine Kurvenschar für die Referenzmesskurven 13. Zusätzlich ist die Wichtung 24 der Abtastwerte 15 vorgenommen. Diese Wichtung 24 wurde in Abhängigkeit der entsprechenden Kurvenschar ermittelt. Es ist deutlich dargestellt, dass der Messbereich 18 für die Objektdetektion im Unterbodenbereich 12 am auschlaggebendsten ist und es sich genau zwischen der Ausschwingzeit 16 und der Bodenreflexion 19 befindet. Zusätzlich kann auch hier vorgesehen sein, dass die Ausschwingzeit 16 deutlich weniger gewichtet wird als die Bodenreflexion 19, die zumindest teilweise noch mit höherem Gewicht in die Auswertung eingeht. Insbesondre ist somit die Wichtung 24 im Messbereich 18 deutlich höher als in der Ausschwingzeit 16 und dem Bodenreflexionsbereich 17.

Insbesondere kann vorgesehen sein, dass die Wichtung 24 an die entsprechenden Gegebenheiten während der Erzeugung der Referenzmesskurve 13 angepasst wird und somit eine passgenaue Funktion für das jeweilige Umgebungsszenario darstellt. Mit der adaptiven Wichtung 24 kann also die Objekterkennung insgesamt verbessert werden, unter anderem auch dadurch, dass sich die Auswertung so deutlich besser an die Gegebenheiten anpasst.

Die Fig. 4 zeigt somit insbesondere, dass ein Messbereich 18 in der Vergleichsmesskurve 14 bestimmt wird, wobei die Wichtung 24 für die Abtastwerte 15 in dem Messbereich 18 gegenüber den Abtastwerten 15 außerhalb des Messbereichs 18 erhöht wird. Insbesondere kann der Bodenreflexionsbereich 17 die Ausschwingzeit 16 des Ultraschallsensors 4, 5, 6, 7 in der Referenzmesskurve 13 bestimmt werden, wobei die Wichtung 24 für die Abtastwerte 15 in dem Bodenreflexionsbereich 17 gegenüber Abtastwerten 15 innerhalb der Ausschwingzeit 16 erhöht wird. Zur Überwachung des Unterbodenbereichs 12 kann insbesondere, wie durch die Wichtung 24 dargestellt, eine nichtlineare Wichtung 24 über die Ausschwingzeit 16, der Messbereich 18 und den Bodenreflexionsbereich 17 durchgeführt werden.

Die Erfindung betrifft auch ein nicht dargestelltes Computerprogrammprodukt sowie ein nicht dargestelltes computerlesbares Speichermedium.

## Patentansprüche

1. Verfahren zum Betreiben einer Ultraschallsensorvorrichtung (2) für ein Überwachen eines Unterbodenbereichs (12) eines Kraftfahrzeugs (1) mittels der Ultraschallsensorvorrichtung (2) des Kraftfahrzeugs (1), bei welchem mittels zumindest eines Ultraschallsensors (4, 5, 6, 7) der Ultraschallsensorvorrichtung (2) Ultraschallsignale (U) in den Unterbodenbereich (12) ausgesendet werden und bei welchem mittels des Ultraschallsensors (4, 5, 6, 7) die reflektierten Ultraschallsignale (U) empfangen und ausgewertet werden, wobei nach einem Abstellen des Kraftfahrzeugs (1) zu einem ersten Zeitpunkt (t₁) eine Referenzmesskurve (13) für den Unterbodenbereich (12) in Abhängigkeit von zumindest einem Ultraschallsignal (U) erzeugt und abgespeichert wird,
wobei ein Messbereich (18) in der Referenzmesskurve (13) bestimmt wird, in welchem eine Auswertung für die Überwachung des Unterbodenbereichs (12) durchgeführt wird, wobei der Messbereich (18) in Abhängigkeit von einer Ausschwingzeit (16) des Ultraschallsensors (4, 5, 6, 7) und einer Bodenreflexion (19) auf der Bodenfläche (11) bestimmt wird,
wobei nach einem erneuten Start des Kraftfahrzeugs (1) zu einem zum ersten Zeitpunkt (t1) späteren zweiten Zeitpunkt (t2) eine Vergleichsmesskurve (14) in Abhängigkeit von zumindest einem weiteren Ultraschallsignal (U) erzeugt wird und die Referenzmesskurve (13) mit der Vergleichsmesskurve (14) im Messbereich (18) verglichen wird und in Abhängigkeit von dem Vergleich das Überwachen des Unterbodenbereichs (12) mittels einer elektronischen Recheneinrichtung (3) der Ultraschallsensorvorrichtung erfolgt,
**dadurch gekennzeichnet,**
**dass** in Abhängigkeit von dem Vergleich eine Höhenänderung (Δh) zwischen einem Unterboden (10) des Kraftfahrzeugs (1) und einer Bodenfläche (11) im Unterbodenbereich (12) bestimmt wird und die Höhenänderung (Δh) bei der Auswertung und dem Überwachen berücksichtigt wird, wobei die Höhenänderung (Δh) zwischen dem ersten Zeitpunkt (t1) und dem zweiten Zeitpunkt (t2) bestimmt wird.

2. Verfahren nach Anspruch 1,
**dadurch gekennzeichnet, dass**
im reflektierten Ultraschallsignal (U) der Referenzmesskurve (13) eine Bodenreflexion (19) der Bodenfläche (11) bestimmt wird und eine erste Höhe (h1) zur Bodenfläche (11) auf Basis der bestimmten Bodenreflexion (19) zum ersten Zeitpunkt (t₁) bestimmt wird und im weiteren reflektierten Ultraschallsignal (U) der Vergleichsmesskurve (14) eine Bodenreflexion (19) der Bodenfläche (11) bestimmt wird und eine zweite Höhe (h2) zur Bodenfläche (11) auf Basis der bestimmten Bodenreflexion (19) zum zweiten Zeitpunkt (t₂) bestimmt wird und durch Vergleichen der ersten Höhe (h1) und der zweite Höhe (h2) die Höhenänderung (Δh) bestimmt wird.

3. Verfahren nach Anspruch 1 oder 2,
**dadurch gekennzeichnet, dass**
eine Ausschwingzeit (16) des Ultraschallsensors (4, 5, 6, 7) bei der Bestimmung der Höhenänderung (Δh) berücksichtigt wird.

4. Verfahren nach einem der Ansprüche 1 bis 3,
**dadurch gekennzeichnet, dass**
zumindest eine erste Umweltbedingung bei der Erzeugung der Referenzmesskurve (13) erfasst wird und zumindest eine zweite Umweltbedingung bei der Erzeugung der Vergleichsmesskurve (14) erfasst wird und die erste Umweltbedingung und die zweite Umweltbedingung bei der Bestimmung der Höhenänderung (Δh) berücksichtigt werden.

5. Verfahren nach einem der vorhergehenden Ansprüche,
**dadurch gekennzeichnet, dass**
von dem zumindest einen Ultraschallsensor (4, 5, 6, 7) in einem Bereich hinter einem Rad (8, 9) des Kraftfahrzeugs (1) das Ultraschallsignal (U) ausgesendet wird.

6. Verfahren nach einem der vorhergehenden Ansprüche,
**dadurch gekennzeichnet, dass**
die Ultraschallsensorvorrichtung (2) eine Vielzahl von Ultraschallsensoren (4, 5, 6, 7) am Kraftfahrzeug (1) aufweist, wobei mittels der Vielzahl von Ultraschallsensoren (4, 5, 6, 7) der Unterbodenbereich (12) des Kraftfahrzeugs (1) überwacht wird.

7. Verfahren nach Anspruch 6,
**dadurch gekennzeichnet, dass**
eine jeweilige Referenzmesskurve (13) und/oder eine jeweilige Vergleichsmesskurve (14) eines Ultraschallsensors (4, 5, 6, 7) der Vielzahl von Ultraschallsensoren (4, 5, 6, 7) mit zumindest einer jeweiligen Referenzmesskurve (13) und/oder einer jeweiligen Vergleichsmesskurve (14) eines weiteren Ultraschallsensors (4, 5, 6, 7) der Vielzahl von Ultraschallsensoren (4, 5, 6, 7) verglichen und verifiziert wird.

8. Verfahren nach einem der vorhergehenden Ansprüche,
**dadurch gekennzeichnet, dass**
während der Erzeugung der Referenzmesskurve (13) überfahrene Objekte im Messbereich bei der Überwachung berücksichtigt werden.

9. Verfahren nach einem der vorhergehenden Ansprüche,
**dadurch gekennzeichnet, dass**
eine Wichtung (24) für Abtastwerte (15) in dem Messbereich (18) gegenüber Abtastwerten (15) außerhalb des Messbereichs (18) erhöht wird.

10. Verfahren nach einem der vorhergehenden Ansprüche,
**dadurch gekennzeichnet, dass**
ein Bodenreflexionsbereich (17) und eine Ausschwingzeit (16) des Ultraschallsensors (4, 5, 6, 7) in der Referenzmesskurve (13) bestimmt werden, wobei eine Wichtung (24) für Abtastwerte (15) in dem Bodenreflexionsbereich (16) gegenüber Abtastwerten (15) innerhalb der Ausschwingzeit (16) erhöht wird.

11. Verfahren nach Anspruch 9 und 10,
**dadurch gekennzeichnet, dass**
zum Überwachen des Unterbodenbereichs (12) eine nichtlineare Wichtung (24) über die Ausschwingzeit (16), den Messbereich (18) und den Bodenreflexionsbereich (17) durchgeführt wird.

12. Computerprogrammprodukt mit Programmcodemitteln, welche in einem computerlesbaren Speichermedium gespeichert sind, um das Verfahren nach einem der vorhergehenden Ansprüche 1 bis 11 auf einer Ultraschallvorrichtung nach Anspruch 14 durchzuführen, wenn das Computerprogrammprodukt auf einem Prozessor einer elektronischen Recheneinrichtung (3) der Ultraschallvorrichtung abgearbeitet wird.

13. Computerlesbares Speichermedium mit einem Computerprogrammprodukt nach Anspruch 12.

14. Ultraschallsensorvorrichtung (2) zum Überwachen eines Unterbodenbereichs (12) eines Kraftfahrzeugs (1), mit zumindest einem Ultraschallsensor (4, 5, 6, 7) und mit einer elektronischen Recheneinrichtung (3), wobei die Ultraschallsensorvorrichtung (2) zum Durchführen eines Verfahrens nach einem der Ansprüche 1 bis 11 ausgebildet ist.

## Claims

1. Method for operating an ultrasonic sensor device (2) for monitoring an underbody region (12) of a motor vehicle (1) by means of the ultrasonic sensor device (2) of the motor vehicle (1), in which method ultrasonic signals (U) are emitted into the underbody region (12) by means of at least one ultrasonic sensor (4, 5, 6, 7) of the ultrasonic sensor device (2), and the reflected ultrasonic signals (U) are received and evaluated by means of the ultrasonic sensor (4, 5, 6, 7), wherein, after the motor vehicle (1) has been parked at a first point in time (t₁), a reference measurement curve (13) for the underbody region (12) is generated as a function of at least one ultrasonic signal (U) and stored, wherein a measurement region (18) is determined in the reference measurement curve (13), in which region the process of monitoring the underbody region (12) is evaluated, wherein the measurement region (18) is determined on the basis of a decay time (16) of the ultrasonic sensor (4, 5, 6, 7) and a ground reflection (19) on the ground surface (11),
wherein, after a restart of the motor vehicle (1), at a second point in time (t2) later than the first point in time (t1), a comparison measurement curve (14) is generated as a function of at least one further ultrasonic signal (U) and the reference measurement curve (13) is compared with the comparison measurement curve (14) in the measurement region (18) and, based on the comparison, the underbody region (12) is monitored by means of an electronic computing device (3) of the ultrasonic sensor device,
**characterized**
**in that**, based on the comparison, a change in height (Δh) between an underbody (10) of the motor vehicle (1) and a ground surface (11) in the underbody region (12) is determined, and the change in height (Δh) is taken into account in the evaluation and monitoring, wherein the change in height (Δh) between the first point in time (t1) and the second point in time (t2) is determined.

2. Method according to Claim 1,
**characterized in that**
in the reflected ultrasonic signal (U) of the reference measurement curve (13), a ground reflection (19) of the ground surface (11) is determined and a first height (h1) relative to the ground surface (11) is determined on the basis of the determined ground reflection (19) at the first point in time (t₁), and in the further reflected ultrasonic signal (U) of the comparison measurement curve (14), a ground reflection (19) of the ground surface (11) is determined and a second height (h2) relative to the ground surface (11) is determined on the basis of the determined ground reflection (19) at the second point in time (t₂), and the change in height (Δh) is determined by comparing the first height (h1) and the second height (h2) .

3. Method according to Claim 1 or 2,
**characterized in that**
a decay time (16) of the ultrasonic sensor (4, 5, 6, 7) is taken into account when determining the change in height (Δh).

4. Method according to one of Claims 1 to 3,
**characterized in that**
at least one first environmental condition is detected when generating the reference measurement curve (13) and at least one second environmental condition is detected when generating the comparison measurement curve (14) and the first environmental condition and the second environmental condition are taken into account when determining the change in height (Δh).

5. Method according to one of the preceding claims, **characterized in that**
the ultrasonic signal (U) is emitted by the at least one ultrasonic sensor (4, 5, 6, 7) in a region behind a wheel (8, 9) of the motor vehicle (1).

6. Method according to one of the preceding claims, **characterized in that**
the ultrasonic sensor device (2) has a plurality of ultrasonic sensors (4, 5, 6, 7) on the motor vehicle (1), wherein the underbody region (12) of the motor vehicle (1) is monitored by means of the plurality of ultrasonic sensors (4, 5, 6, 7).

7. Method according to Claim 6,
**characterized in that**
a respective reference measurement curve (13) and/or a respective comparison measurement curve (14) of an ultrasonic sensor (4, 5, 6, 7) of the plurality of ultrasonic sensors (4, 5, 6, 7) is compared with at least one respective reference measurement curve (13) and/or a respective comparison measurement curve (14) of a further ultrasonic sensor (4, 5, 6, 7) of the plurality of ultrasonic sensors (4, 5, 6, 7) and verified.

8. Method according to one of the preceding claims, **characterized in that**
objects in the measurement region that have been driven over during the generation of the reference measurement curve (13) are taken into account during monitoring.

9. Method according to one of the preceding claims, **characterized in that**
a weighting (24) for samples (15) in the measurement region (18) is increased compared to samples (15) outside the measurement region (18).

10. Method according to one of the preceding claims, **characterized in that**
a ground reflection region (17) and a decay time (16) of the ultrasonic sensor (4, 5, 6, 7) are determined in the reference measurement curve (13), wherein a weighting (24) for samples (15) in the ground reflection region (16) is increased compared to samples (15) within the decay time (16).

11. Method according to Claims 9 and 10,
**characterized in that**
to monitor the underbody region (12), a non-linear weighting (24) is carried out over the decay time (16), the measurement region (18) and the ground reflection region (17).

12. Computer program product having program code means that are stored in a computer-readable storage medium in order to carry out the method according to one of the preceding Claims 1 to 11 on an ultrasonic device according to Claim 14 when the computer program product is executed on a processor of an electronic computing device (3) of the ultrasonic device.

13. Computer-readable storage medium having a computer program product according to Claim 12.

14. Ultrasonic sensor device (2) for monitoring an underbody region (12) of a motor vehicle (1), having at least one ultrasonic sensor (4, 5, 6, 7) and having an electronic computing device (3), the ultrasonic sensor device (2) being designed to carry out a method according to one of Claims 1 to 11.

## Revendications

1. Procédé pour faire fonctionner un arrangement de capteurs à ultrasons (2) pour une surveillance d'une zone de dessous de caisse (12) d'un véhicule automobile (1) au moyen de l'arrangement de capteurs à ultrasons (2) du véhicule automobile (1), avec lequel des signaux ultrasonores (U) sont émis dans la zone de dessous de caisse (12) au moyen d'au moins un capteur à ultrasons (4, 5, 6, 7) de l'arrangement de capteurs à ultrasons (2) et avec lequel les signaux ultrasonores (U) réfléchis sont reçus et évalués au moyen du capteur à ultrasons (4, 5, 6, 7), une courbe de mesure de référence (13) pour la zone du dessous de caisse (12) étant générée et mémorisée en fonction d'au moins un signal ultrasonore (U) après un arrêt du véhicule automobile (1) à un premier instant (t₁),
une plage de mesure (18) étant déterminée dans la courbe de mesure de référence (13), dans laquelle une évaluation est effectuée pour la surveillance de la zone de dessous de caisse (12), la plage de mesure (18) étant déterminée en fonction d'un temps d'oscillation (16) du capteur à ultrasons (4, 5, 6, 7) et d'une réflexion du sol (19) sur la surface du sol (11),
une courbe de mesure de comparaison (14) étant générée, après un nouveau démarrage du véhicule automobile (1) à un deuxième instant (t2) ultérieur au premier instant (t1), en fonction d'au moins un signal ultrasonore (U) supplémentaire et la courbe de mesure de référence (13) étant comparée à la courbe de mesure de comparaison (14) dans la plage de mesure (18) et, en fonction de la comparaison, la surveillance de la zone du dessous de caisse (12) étant effectuée au moyen d'un dispositif de calcul électronique (3) de l'arrangement de capteurs à ultrasons,
**caractérisé en ce**
**qu'**une variation de hauteur (Δh) entre un dessous de caisse (10) du véhicule automobile (1) et une surface du sol (11) dans la zone de dessous de caisse (12) est déterminée en fonction de la comparaison, et la variation de hauteur (Δh) est prise en compte lors de l'évaluation et de la surveillance, la variation de hauteur (Δh) étant déterminée entre le premier instant (t1) et le deuxième instant (t2).

2. Procédé selon la revendication 1,
**caractérisé en ce que**
une réflexion du sol (19) de la surface du sol (11) est déterminée dans le signal ultrasonore (U) réfléchi de la courbe de mesure de référence (13), et une première hauteur (h1) par rapport à la surface du sol (11) est déterminée au premier instant (t₁) sur la base de la réflexion du sol (19) déterminée et une réflexion du sol (19) de la surface du sol (11) est déterminée dans le signal ultrasonore (U) réfléchi supplémentaire de la courbe de mesure de comparaison (14), et une deuxième hauteur (h2) par rapport à la surface du sol (11) est déterminée au deuxième instant (t₂) sur la base de la réflexion du sol (19) déterminée et la variation de hauteur (Δh) est déterminée en comparant la première hauteur (h1) et la deuxième hauteur (h2).

3. Procédé selon la revendication 1 ou 2,
**caractérisé en ce que**
un temps d'oscillation (16) du capteur à ultrasons (4, 5, 6, 7) est pris en compte lors de la détermination de la variation de hauteur (Δh).

4. Procédé selon l'une des revendications 1 à 3, **caractérisé en ce que**
au moins une première condition environnementale est acquise lors de la génération de la courbe de mesure de référence (13) et au moins une deuxième condition environnementale est acquise lors de la génération de la courbe de mesure de comparaison (14) et la première condition environnementale et la deuxième condition environnementale sont prises en compte lors de la détermination de la variation de hauteur (Δh).

5. Procédé selon l'une des revendications précédentes, **caractérisé en ce que**
le signal ultrasonore (U) est émis par l'au moins un capteur à ultrasons (4, 5, 6, 7) dans une zone située derrière une roue (8, 9) du véhicule automobile (1).

6. Procédé selon l'une des revendications précédentes, **caractérisé en ce que**
l'arrangement de capteurs à ultrasons (2) possède une pluralité de capteurs à ultrasons (4, 5, 6, 7) au niveau du véhicule automobile (1), la zone du dessous de caisse (12) du véhicule automobile (1) étant surveillée au moyen de la pluralité de capteurs à ultrasons (4, 5, 6, 7).

7. Procédé selon la revendication 6,
**caractérisé en ce que**
une courbe de mesure de référence (13) respective et/ou une courbe de mesure de comparaison (14) respective d'un capteur à ultrasons (4, 5, 6, 7) de la pluralité de capteurs à ultrasons (4, 5, 6, 7) est comparée avec au moins une courbe de mesure de référence (13) respective et/ou une courbe de mesure de comparaison (14) respective d'un capteur à ultrasons (4, 5, 6, 7) supplémentaire de la pluralité de capteurs à ultrasons (4, 5, 6, 7), puis vérifiée.

8. Procédé selon l'une des revendications précédentes, **caractérisé en ce que**
les objets franchis dans la plage de mesure pendant la génération de la courbe de mesure de référence (13) sont pris en compte lors de la surveillance.

9. Procédé selon l'une des revendications précédentes, **caractérisé en ce que**
une pondération (24) pour des valeurs d'échantillonnage (15) dans la plage de mesure (18) est augmentée par rapport à des valeurs d'échantillonnage (15) en dehors de la plage de mesure (18).

10. Procédé selon l'une des revendications précédentes, **caractérisé en ce que**
une zone de réflexion du sol (17) et un temps d'oscillation (16) du capteur à ultrasons (4, 5, 6, 7) sont déterminés dans la courbe de mesure de référence (13), une pondération (24) pour les valeurs d'échantillonnage (15) dans la zone de réflexion du sol (16) étant augmentée par rapport aux valeurs d'échantillonnage (15) à l'intérieur du temps d'oscillation (16).

11. Procédé selon la revendication 9 ou 10, **caractérisé en ce que**
pour surveiller la zone du dessous de caisse (12), une pondération non linéaire (24) est effectuée sur le temps d'oscillation (16), la plage de mesure (18) et la zone de réflexion du sol (17).

12. Produit de programme informatique, comprenant des moyens de code de programme qui sont enregistrés dans un support de mémorisation lisible par ordinateur afin de mettre en œuvre le procédé selon l'une des revendications précédentes 1 à 11 sur un arrangement à ultrasons selon la revendication 14, lorsque le produit de programme informatique est exécuté sur un processeur d'un dispositif de calcul électronique (3) de l'arrangement à ultrasons.

13. Support de mémorisation lisible par ordinateur comprenant un produit de programme informatique selon la revendication 12.

14. Arrangement de capteurs à ultrasons (2) destiné à surveiller une zone de dessous de caisse (12) d'un véhicule automobile (1), comprenant au moins un capteur à ultrasons (4, 5, 6, 7) et comprenant un dispositif de calcul électronique (3), l'arrangement de capteurs à ultrasons (2) étant configuré pour mettre en œuvre un procédé selon l'une des revendications 1 à 11.
